# EUROPEAN PATENT APPLICATION

(11) **EP 4 789 966 A1**
(43) Date of publication of application: **12.08.2026**
(21) Application number: 25220878.0
(22) Date of filing: 04.12.2025
(51) Int. Cl.: B64D 11/06

(54) **CONVERTIBLE OVERHEAD CREW REST SYSTEM FOR AN INTERNAL CABIN OF AN AIRCRAFT**

(30) Priority: 07.02.2025 US 202563755531 P; 27.10.2025 US 202519370292
(71) Applicant: The Boeing Company, Arlington, VA 22202 (US)
(72) Inventor: MILLS, Christopher John, Arlington, 22202 (US); HALL, Curtis L., Jr, Arlington, 22202 (US); TRAVIS, Emily Mikkelson, Arlington, 22202 (US); ALEXANDER, Neil A., Arlington, 22202 (US)
(74) Representative: Boult Wade Tennant LLP

(57) **Abstract**

A crew rest system is configured for an internal cabin of a vehicle, such as a commercial aircraft. The crew rest system includes steps moveable between a stairway deployed position and a stairway stowed position. The crew rest system also includes a seat moveable between a seating stowed position and a seating deployed position.

## Description

### TECHNICAL FIELD

Examples of the present disclosure generally relate to convertible overhead crew rest systems for an internal cabin of a vehicle, such as a commercial aircraft.

### DESCRIPTION OF THE ART

Vehicles such as commercial aircraft are used to transport passengers between various locations. A typical commercial aircraft includes an internal cabin having seats for passengers. During certain types of flights, such as long haul flights, crew members of an aircraft may need to rest. As such, certain aircraft include crew rest areas. For example, a crew rest area in the form of an overhead crew rest (OCR) area is disposed within an internal cabin of certain aircraft.

Certain crew rests provide a flat surface for sleeping as well as one or more seats. Some crew rests are located in the crown of the aircraft above the interior features of the main cabin and referred to as Overhead Crew Rests (OCRs). An OCR typically includes an entry module with stairs, an area for seating, and an area for sleeping. A typical OCR has a primary egress path, which includes stairs and at least one other alternate (or emergency) egress path in the event the primary egress path is blocked. Some OCRs have a seat or seats that can only be occupied during non-taxi, takeoff, and landing (TT&L) phases of a flight profile. Some OCRs are certified to be occupied during the TT&L phase. In such crew rests, a primary entry door is secured in the open position to allow unobstructed egress in the event a rapid egress is necessary. It is understood that if the primary egress path is blocked during TT&L and egress is required, the secondary egress path can be utilized.

Secondary egress paths for OCRs typically are of a hatch type configuration, and enable occupants to drop down to the main cabin. These alternate egress paths are designed so as not to impede general egress of the main cabin passengers. For example, the OCR occupants typically drop down adjacent to, but not directly into, a main aisle, although occupants are allowed to drop down over a seat.

In general, OCR typically are located close to a flight deck, and as such have an alternate egress hatch often above premium class seating. Some long duration flights with OCR are also equipped with suite style passenger seats on the main deck including a semi-enclosed compartment with a movable door so as to provide increased privacy for the main deck occupant.

One of the primary challenges in crew rest area design is providing both a primary egress path and sufficient alternate egress routes without impinging on the main cabin flow. Conventionally, a fixed access structure serves as the primary entrance, while one or more hatches constitute alternate egress paths-each intended to discharge occupants adjacent to, but not directly into, a main cabin aisle. Furthermore, certain seating arrangements within these areas are restricted during the TT&L phases unless the rest compartment holds specific TT&L certification. When such certification is in place, the primary entry door may remain secured open, and reliance is placed on alternate hatches to satisfy rapid egress requirements.

Some known regulatory guidance prohibits an alternate egress path from passing through semi-enclosed passenger suites on the main deck. As a result, tailored egress arrangements need to be devised, or TT&L certification is forfeited. In practice, non-working pilots are often reassigned to main-deck revenue seats during significant flight phases, which can reduce available passenger seating and complicate cabin operations. Moreover, fixed seating and access installations occupy designated volume that cannot readily adapt to shifting flight-profile demands.

Additionally, space within the vestibule is naturally constrained, and existing fixed installations provide either access or seating at any given time, but not both concurrently. There remains a clear need for a more streamlined solution that optimizes available volume, ensures unobstructed egress during TT&L phases, and affords crew members an approved seating arrangement without encroaching on main - deck passenger areas. Such an improved configuration would address inefficiencies in current layouts and support enhanced cabin utility on long - haul operations.

### BRIEF SUMMARY

A crew rest system is configured for an internal cabin of a vehicle. The crew rest system includes steps moveable between a stairway deployed position and a stairway stowed position; and a seat moveable between a seating stowed position and a seating deployed position.

In some examples, the crew rest system may include steps that can move between a stairway deployed position and a stairway stowed position. A seat may move between a seating stowed position and a seating deployed position. The steps may be disposed within an entrance enclosure of an overhead crew rest of the internal cabin. In the stairway deployed position, the steps may define a primary egress path between a main deck of the internal cabin and a platform of the overhead crew rest. While the steps are moved to the stairway stowed position, the seat may occupy at least a portion of space vacated by the steps. The seat may be completely contained within the entrance enclosure. The seat may be certified for use during taxi, take-off, and landing. The seat may include a safety restraint and a head-impact-protection structure. The steps may each be hinged to pivot upward to a vertical or substantially vertical orientation when moved from the stairway deployed position to the stairway stowed position. The seat may include a seat pan and a backrest that are folded against an entrance enclosure in the seating stowed position. The seat pan and backrest may rotate outward into the seating deployed position. At least one of the steps may form a structural support for one or both of the seat pan or the backrest while the seat is in the seating deployed position. The crew rest system may further include an actuation mechanism operatively coupled to the steps and the seat. The actuation mechanism may drive movement of the steps toward the stairway stowed position and, sequentially, movement of the seat toward the seating deployed position. The actuation mechanism may include a mechanical linkage that prevents deployment of the seat until the steps reach the stairway stowed position. The seat may include a headrest that is deployed by sliding or rotating into position after the steps are moved to the stairway stowed position. The steps and the seat may be arranged such that the seat is adjacent to a main aisle of the internal cabin while in the seating deployed position. The seat may include a contoured seat bottom feature that is removed from a stowed location and placed onto the steps while the steps are in the stairway stowed position. The steps and the seat may be arranged such that movement of the steps drives movement of the seat or movement of the seat drives movement of the steps.

A method may include converting an overhead crew rest entrance of a vehicle between an access configuration and a taxi-take-off-landing seating configuration. The method may include deploying a stairway that provides crew access to an overhead crew rest. After crew egress, the method may include moving the stairway toward a stowed position by at least one of pivoting, sliding, or rotating the stairway. The method may include deploying a seat into space vacated by the stairway so that the seat is fully contained within an entrance enclosure and is usable during taxi, take-off, and landing. Moving the stairway toward the stowed position may include pivoting a plurality of stair treads upward against a sidewall of the entrance enclosure. The method may include rotating a seat pan downward into a vacated space. Deploying the seat may include folding out a seat pan and rotating a backrest outward from an interior surface of the entrance enclosure. The method may include sliding a headrest upward into a seating deployed position after the stairway is moved to the stowed position. The method may include driving movement of the stairway and the seat via a mechanical linkage that prevents deployment of the seat until the stairway reaches the stowed position. The method may include securing the stairway in a stairway deployed position. The method may include securing the seat in a seating deployed position with respective latches.

A conversion mechanism for an overhead crew rest entrance of a vehicle may include a stair module mounted for movement between a stairway deployed position and a stairway stowed position. A seat module may be mounted for movement between a seating stowed position and a seating deployed position. A coupled-motion linkage may operatively connect the stair module and the seat module such that movement of the stair module toward the stairway stowed position drives the seat module toward the seating deployed position. Latches may secure the stair module in the stairway deployed position and secure the seat module in the seating deployed position. The stair module may include a plurality of stair treads connected to a sidewall of an entrance enclosure in a manner that allows rotational movement. The plurality of stair treads may rotate upward to the stairway stowed position.

### BRIEF DESCRIPTION OF THE DRAWINGS

Figure 1 illustrates a perspective front view of an aircraft, according to an example of the present disclosure.
Figure 2 illustrates a perspective interior view of an internal cabin of an aircraft, according to an example of the present disclosure.
Figure 3 illustrates a side view of an overhead crew rest system within an internal cabin of an aircraft.
Figure 4 illustrates a plan view of the overhead crew rest system of Figure 3.
Figure 5 illustrates a perspective view of an overhead crew rest system from a main deck of an internal cabin.
Figure 6 illustrates a perspective view of the overhead crew rest system of Figure 5 as seen from a sleeping module.
Figure 7A illustrates a side view of a crew rest system having steps in a deployed position, and a seat in a stowed position, according to an example of the present disclosure.
Figure 7B illustrates a side view of the crew rest system of Figure 7A having the steps in a stowed position, and the seat in a deployed position.
Figure 8A illustrates a side view of a crew rest system having steps in a deployed position, and a seat in a stowed position, according to an example of the present disclosure.
Figure 8B illustrates a side view of the crew rest system of Figure 8A having the steps in a stowed position, and the seat in a deployed position.
Figure 9A illustrates a side view of a crew rest system having steps in a deployed position, and a seat in a stowed position, according to an example of the present disclosure.
Figure 9B illustrates a side view of the crew rest system of Figure 9A having the steps in a stowed position, and the seat in a deployed position.
Figure 10A illustrates a side view of a crew rest system having steps in a deployed position, and a seat in a stowed position, according to an example of the present disclosure.
Figure 10B illustrates a side view of the crew rest system of Figure 10A having the steps in a stowed position, and the seat in a deployed position.
Figure 11A illustrates a side view of a crew rest system having steps in a deployed position, and a seat in a stowed position, according to an example of the present disclosure.
Figure 11B illustrates a side view of the crew rest system of Figure 11A having the steps in a stowed position, and the seat in a deployed position.
Figure 12 illustrates a flowchart of one example of a method for deploying and retracting an overhead crew rest system.

### DETAILED DESCRIPTION

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

United States Federal Aviation Administration (FAA) regulations as currently written do not allow an alternate egress path of an OCR to include passage through a suite. In such cases, a novel alternate egress path tailored to the suite needs to be designed and certified, or the OCR is delivered without being certified for occupancy during TT&L. In such cases, non-working pilots need to be seated elsewhere in the aircraft during TT&L, which may include use of an otherwise revenue generating main deck seat.

Examples of the present disclosure provide overhead crew rest systems configured to provide an alternate egress path, as well as provide an improved egress path, and have a seat certified for TT&L. The crew rest systems described herein utilize the space of an OCR currently incorporating a stairway, and also include a seat during TT&L, such that the space can be easily converted from a stairway to a seat depending on the needs of a flight profile.

The crew rest systems according to examples of the present disclosure include a stairway having steps (stairs) configured to be converted between deployed and stowed positions, as well as a seat configured to be converted between a deployed and stowed position. When the steps are in the stowed position, an area is converted into a seating area. When the seat is in the stowed position, the area is converted into a stairway. In some examples, the steps flip up from a horizontal orientation to a vertical or substantially vertical stowed orientation enabling the unfolding of seating features into the space previously utilized by the steps. Further, the steps can flip up or down, laterally hinge left or right, and/or the like. In other examples, the steps can slide and/or rotate from a deployed state to a stowed state, thereby enabling the unfolding of seating features into the space previously utilized by the steps. One or more steps may or may not be attached to portions of the seat, such that the motion of one drives the motion of the other. In other examples, the steps themselves may form the structural support for the one or more portions of the seat. In this case, the flat (or substantially flat) steps can move to an alternate location and orientation, and be supplemented with contoured seating features. These features can be removed from a stowed location to a deployed location.

Combinations of all examples, as well as others not specifically noted here, are also possible. In all such configurations, occupant safety features such as seat belts and head impact structures can be incorporated therein. The systems described herein can be achieved as a series of separate parts or as a single module placed into the OCR. The features can utilize the general structure of the OCR, or can attach directly to the aircraft floor structure. In the above noted configurations, the seat can be configured such that the occupant is fully within the general boundaries of the entrance enclosure of the crew rest, but be close enough to the main deck egress path such that the OCR occupant egress path is negligible in length and complexity, and cannot be reasonably obstructed, thereby eliminating the need for an alternate egress path during TT&L.

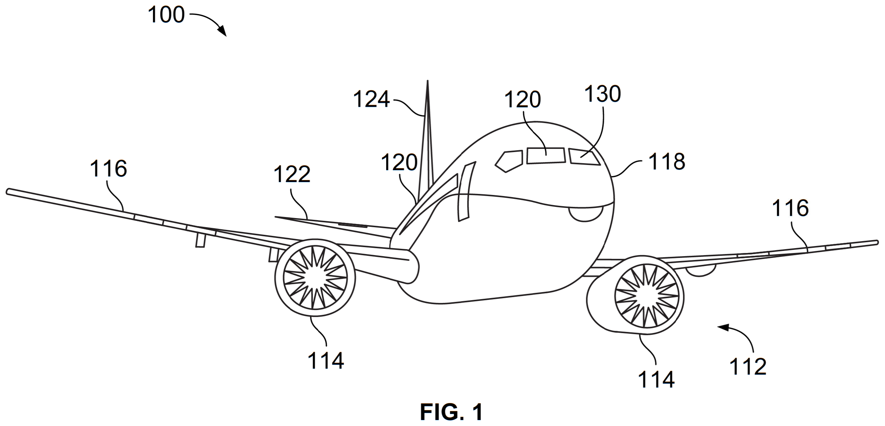

Figure 1 illustrates a perspective front view of an aircraft 100, according to an example of the present disclosure. The aircraft 100 includes a propulsion system 112 that includes engines 114, for example. Optionally, the propulsion system 112 may include more engines 114 than shown. The engines 114 are carried by wings 116 of the aircraft 100. In other examples, the engines 114 may be carried by a fuselage 118 and/or an empennage 120. The empennage 120 may also support horizontal stabilizers 122 and a vertical stabilizer 124. The fuselage 118 of the aircraft 100 defines an internal or main cabin 130, which includes a flight deck or cockpit, one or more work sections (for example, galleys, personnel carry-on baggage areas, and the like), one or more passenger sections (for example, first class, business class, and coach sections), one or more lavatories, and/or the like. Alternatively, instead of an aircraft, examples of the present disclosure may be used with various other vehicles, such as automobiles, buses, locomotives and train cars, watercraft, and the like.

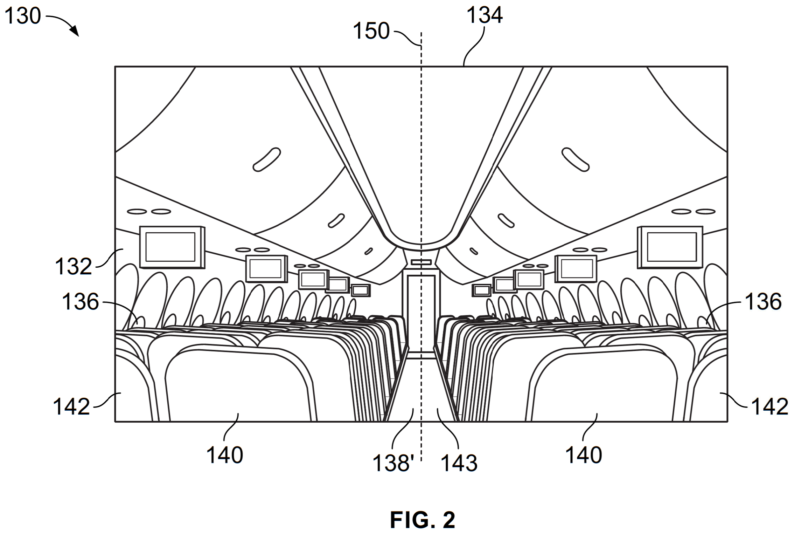

Figure 2 illustrates a perspective interior view of the internal or main cabin 130 of an aircraft 100, according to an example of the present disclosure. The internal or main cabin 130 includes outboard walls 132 and a ceiling 134. Windows 136 may be formed within the outboard walls 132. A floor 138 supports rows of seats 140. As shown in Figure 2, a row 142 may include three seats 140 on either side of an aisle 143. However, the row 142 may include more or less seats 140 than shown. Additionally, the internal cabin 130 may include more aisles than shown. As used herein, the term "outboard" means a position that is further away from a central longitudinal plane 150 of the internal cabin 130 as compared to another component. The term "inboard" means a position that is closer to the central longitudinal plane 150 of the internal cabin 130 as compared to another component.

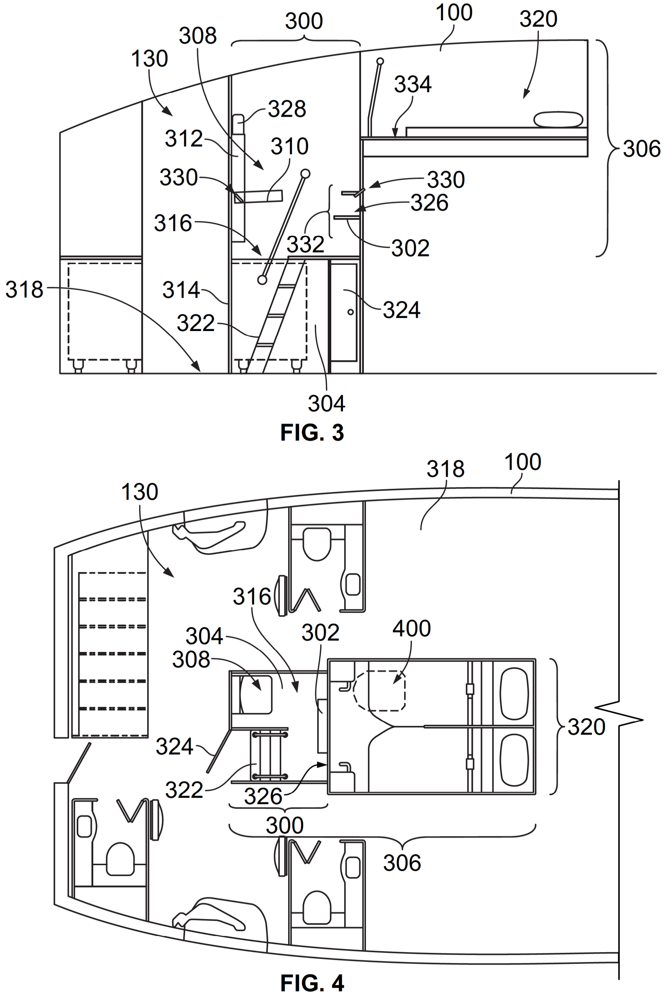

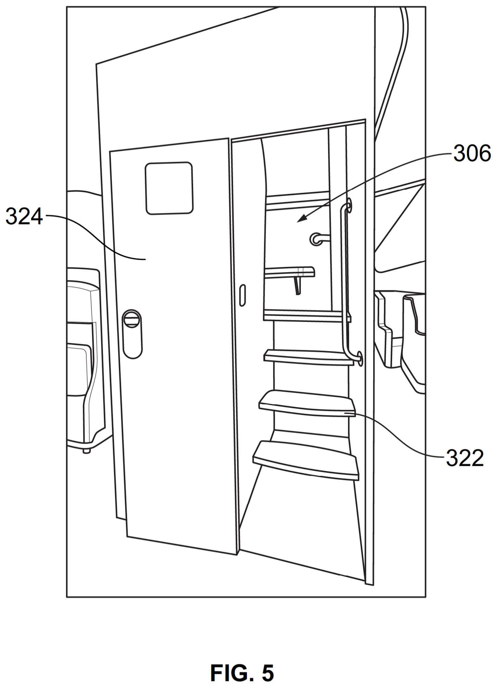

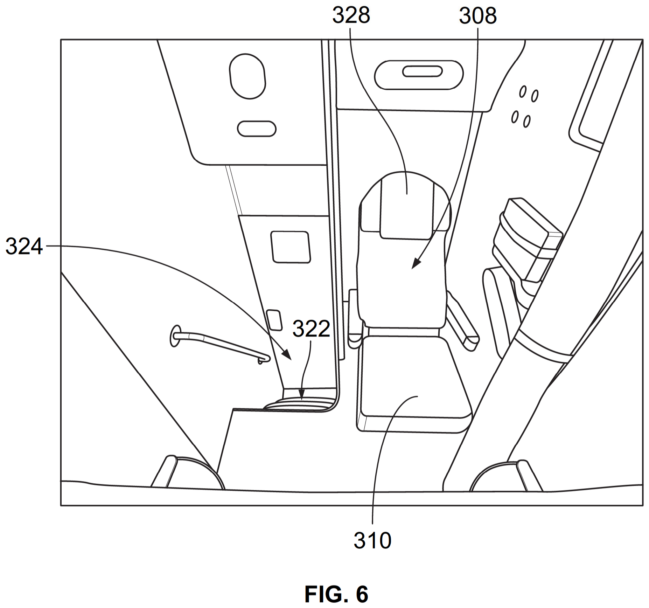

Figure 3 illustrates a side view of one example of an overhead crew rest system 300 within the internal cabin 130 of an aircraft 100. Figure 4 illustrates a plan view of the overhead crew rest system 300 shown in Figure 3. Figure 5 illustrates a perspective view of the overhead crew rest system 300 from a main deck of the internal cabin 130. Figure 6 illustrates a perspective view of the overhead crew rest system 300 shown in Figure 5 as seen from a sleeping module. The crew rest system 300 includes a set of moveable steps 302 that can transition between a stairway deployed position (shown in Figure 3) and a stowed position to allow for efficient use of space within an entrance enclosure 304 of an overhead crew rest area or space 306. These steps 302 may pivot away from or relative to a wall 314 of the entrance enclosure 304 to the deployed position shown in Figure 3, and may pivot in an opposite direction to move to the stowed position.

The steps 302 smoothly transition between the stairway deployed position and the stowed position to optimize the use of space within the entrance enclosure 304. The entrance enclosure 304 represents a structural compartment within the internal cabin 130 of the aircraft 100 that houses the access and seating features of the overhead crew rest system 300. The entrance enclosure 304 serves as the vestibule or entry area to the overhead crew rest area or space 306, and provides a defined space for the moveable steps 302 and the convertible seat assembly 308. The enclosure 304 accommodates the transition of components of the system 300 between deployed and stowed positions (as described herein), ensuring that both the stairway 302 and seat 308 can be securely contained within the boundaries (e.g., walls 314, ceiling 316, and cabin floor 318). The ceiling 316 of the entrance enclosure 304 also can be referred to as a platform on which the person sitting in the seat assembly 308 places their feet and/or which the person stands on. The entrance enclosure 304 can be positioned adjacent to the main deck of the aircraft 100, allowing for direct access to the overhead crew rest platform 316 and facilitating rapid egress in compliance with safety regulations. The entrance enclosure 304 may be enclosed by the walls 314, ceiling/platform 316, and the cabin floor 318 and one or more doors 324 to provide a safe and secure enclosed area for persons (e.g., crewmembers) to rest away from passengers and other crewmembers). Another set of steps 322 can provide access up into the space above the platform 316 to allow persons to reach the steps 302, seat assembly 308, and/or sleeping module 320.

In the deployed position, the steps 302 are arranged horizontally to form a functional stairway 332 that provides access between the main deck and an overhead crew rest platform 334. To move to the stowed position, each step 302 can be pivotally coupled to a wall 314 or other support structure, such as by hinges or rotational bearings, allowing the steps 302 to fold upward into a vertical or substantially vertical orientation. In some examples, the steps 302 may also slide or rotate laterally, or a combination of these movements may be employed, depending on the specific configuration. This transition is often coordinated by an actuation mechanism or mechanical linkage 326 between the steps 302, which ensures that the steps 302 are securely stowed before the seat assembly 308 is deployed (and that no steps 302 remain deployed).

The actuation mechanism or mechanical linkage 326 between the steps 302 coordinates and controls movement of the steps 302 during conversion between deployed and stowed positions. This mechanism 326 may represent a series of mechanical linkages, hinges, or electromechanical actuators that are operatively coupled to the steps 302. The mechanism 326 enables synchronized movement of the steps 302, and ensures the steps 302 transition smoothly and securely. Although both the seat assembly 308 and the steps 302 are shown in deployed positions or states in Figures 3 and 4, in other examples, the actuation mechanism 326 can prevent deployment of the seat assembly 308 until all steps 302 have reached the stowed position to enhance safety and prevent improper operation. This can occur through the mechanical or electromechanical linkage between the steps 302 that is provided by the mechanism 326 and that physically or electronically interlocks the movement of the steps 302 and the seat 308. For example, the mechanism 326 may include a series of cams, levers, or locking pins that are engaged by the steps 302 as the steps 302 transition to the stowed position. Only all steps 302 are fully stowed does this linkage release to allow the seat assembly 308 to rotate or fold into the deployed position. In some examples, sensors or switches may be incorporated into the mechanism 326 to detect the position of each step 302 and provide an additional layer of control by electronically inhibiting seat 308 deployment until all steps 302 are confirmed stowed. This coordinated operation ensures that the conversion process is performed in the correct sequence, reducing the risk of interference, incomplete stowage, or unsafe conditions for the occupant. The stowing of the steps 302 vacates the space required for the seat 308 to be positioned, enabling the conversion of the area from the access stairway 322 to a certified seating arrangement for taxi, take-off, and landing phases.

The sleeping module 320 (also referred to as a bed) is in the rest area or space 306 to provide a dedicated space for crew members to rest in a prone position. The sleeping module 320 is located beyond the entrance enclosure 304 and is accessible via the stairway formed by the deployed steps 302 while in the deployed position shown in Figures 3 and 4. The sleeping module 320 offers a flat, comfortable surface for sleeping, separated from the main cabin 130 to ensure privacy and quiet. The module 320 may include features such as a mattress, pillow, reading light, ventilation controls, and personal storage compartments to enhance comfort and convenience for the occupant. Placement of the module 320 within the overhead crew rest area 306 allows crew members to alternate between work and rest periods efficiently, supporting regulatory requirements for crew rest and contributing to overall flight safety and operational effectiveness. The sleeping module 320 can be structurally integrated into the aircraft 100 and may be distinct from the convertible stairway-seat system, which facilitates access to the module 320 and increases the utility of the space in the entrance enclosure 304.

The seat assembly 308 has a seat pan 310 and seat back (or backrest) 312, both of which are designed to fold or rotate into a deployed seating position once the steps 302 are stowed. A headrest 328 is incorporated into the seat back 312. The headrest 328 which may slide or rotate into place to provide additional occupant comfort and safety. The system 308 can include a contoured seat bottom feature that can be positioned onto the seat pan 310 or steps 302 for ergonomic support. The conversion between stairway and seating configurations can be provided by the actuation mechanism 326, which may include a mechanical linkage to coordinate movement and prevent improper deployment. Latches 330 can be provided to secure both the steps 302 forming the stairway and the seat 308 in their respective deployed positions. Additional components such as mounting brackets, sliding tracks or rotational bearings, fasteners, trim panels, and certification labels can be included to support installation, operation, and regulatory compliance of the crew rest system 300.

As shown in Figure 4, the system 300 may include an egress hatch 400. The egress hatch 400 can be a secondary exit feature incorporated into the overhead crew rest area 306 of the aircraft 100. The egress hatch 400 can provide an alternate exit or escape route for crew members in the event that the primary egress path (e.g., the door 324 and steps 322) is blocked. The egress hatch 400 can be positioned above premium class seating on the main deck (or in another location), and can be a hatch-type opening that enables occupants to drop down from the overhead crew rest are 306 directly into the main cabin. In some examples including the illustrated example, the egress hatch 400 is below or within the sleeping module 320, but alternatively may be in another location. The egress hatch 400 ensures that crew members can exit quickly and safely without impeding the general egress of main cabin passengers, often discharging occupants adjacent to, but not directly into, a main aisle. The hatch 400 can comply with regulatory requirements and provide unobstructed access and facilitating rapid evacuation during emergency situations. In aircraft 100 equipped with suite-style passenger seats, the placement and certification of the egress hatch 400 can avoid passing through enclosed suites, in accordance with current FAA regulations.

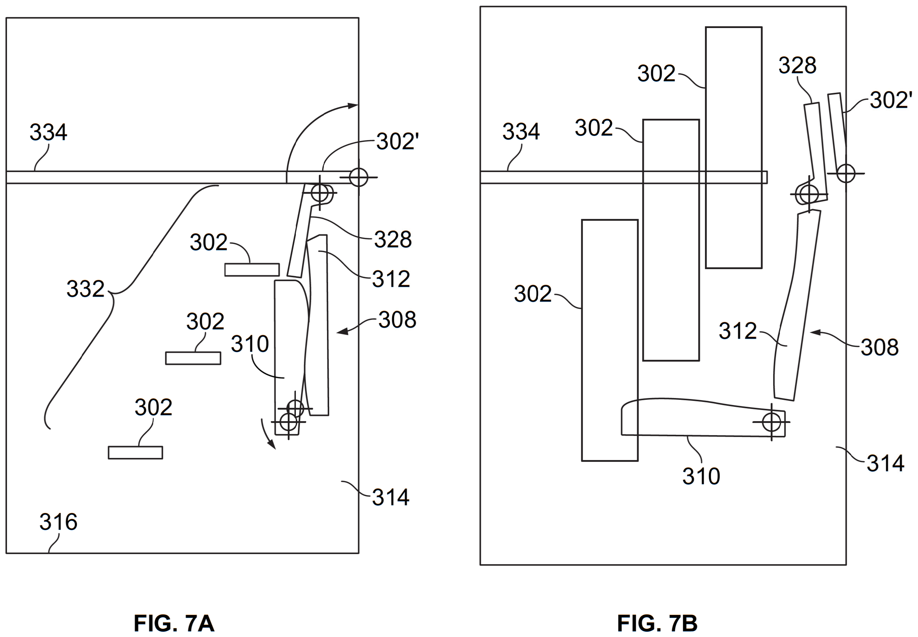

Figure 7A illustrates a side view of the crew rest system 300 shown in Figures 3 through 6 with the steps 302 in the deployed position, and the seat assembly 308 in the stowed position, according to one example. Figure 7B illustrates a side view of the crew rest system 300 shown in Figure 7A having the steps 302in a stowed position, and the seat 308 in a deployed position. Referring to Figures 7A and 7B, the steps 302 in the deployed position define the deployable and retractable stairway 332 leading up to the platform 334. The sleeping module 320 may be on this platform 334, with the deployable/retractable stairway 332 leading to the sleeping module 320.

The steps 302 can be pivotally coupled to the wall 314, for example, such as by hinges, rotational bearings, pivot pins, axles, clevis and pin arrangements, sliding pivot joints, cam mechanisms or articulated linkages, or the like. The steps 302 are configured to fold upward to a stowed configuration, and the components of the seat assembly 308 are configured to rotate into a deployed configuration. The components of the seat assembly 308 can be pivotally coupled to the same or different wall 314 with the same or other parts as the steps 302. These components can include a head rest 328, the seat back 312, and the seat pan 310. A top step 302 (i.e., step 302') of the stairway 332 can be integral or otherwise coupled with the platform 334, and can fold, pivot, or rotate upward to provide space for a head rest 328 of the seat assembly 308 to be deployed. The stairway 332 can include more or fewer steps 302 than shown.

In Figure 7A, the outer ends of the steps 302, 302' are visible. These outer ends are visible from the perspective of Figure 7A while the steps 302 are pivoted away from the wall 314 (to which the steps 302 are connected) and the step 302' is pivoted downward (e.g., in a counterclockwise direction in the view of Figure 7A). The seat pan 310 is rotated in a clockwise direction and the head rest 328 is rotated in a counterclockwise direction to the stowed position. This allows the stairway 332 to be formed to allow a person to use the stairway 332 to reach the platform 334, while keeping the seat assembly 308 tucked away from movement of the steps 302, 302'.

To transition to the states shown in Figure 7B, the steps 302 are rotated toward the wall 314 such that the outer ends of the steps 302 facing the viewer in Figure 7A are facing upward in Figure 7B. The step 302' can pivot in a clockwise direction from the position in Figure 7A to the position in Figure 7B. The steps 302, 302' are then in a stowed position or state so that the components of the seat assembly 308 can be deployed. For example, the head rest 328 can pivot in a clockwise direction, and the seat pan 310 can pivot in a counterclockwise direction to the state in Figure 7B. This allows a person to sit in the seat assembly 308 with the steps 302, 302' safely placed out of the area occupied by the person sitting in the seat assembly 308. The steps 302 can then pivot away from the wall 314, the step 302' can pivot in a counterclockwise direct, and the seat pan 310 can pivot in a clockwise direction to return to the states shown in Figure 7A.

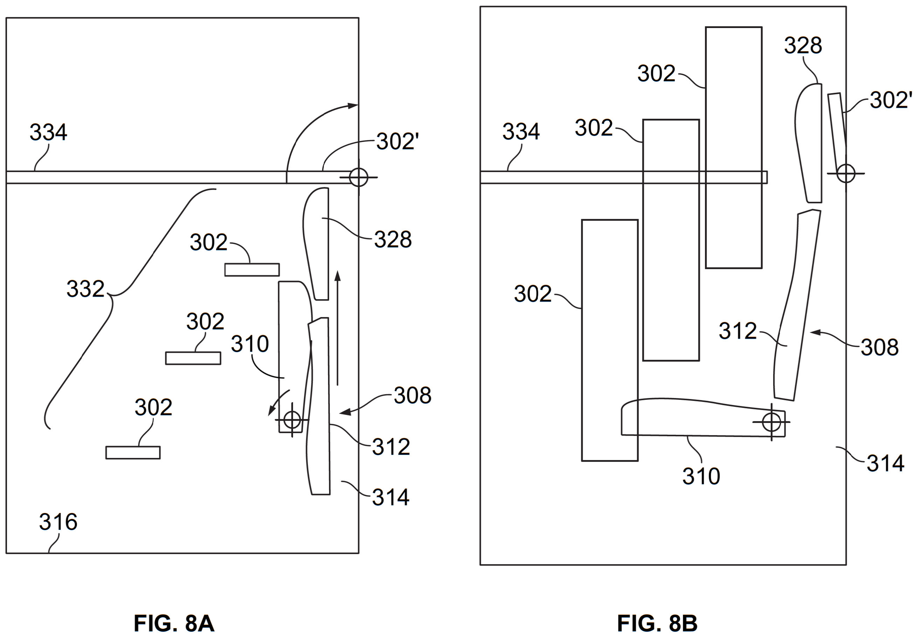

The example illustrated in Figures 7A and 7B may be preferred over the examples shown in Figures 8A and 8B, 9A and 9B, 10A and 10B, and 11A and 11B due to its straightforward mechanical design and ease of operation. In this configuration, the steps 302, 302' pivot upward into a stowed position against the wall 312, and the seat pan 310 and headrest 328 rotate into their deployed positions, providing a clear and intuitive sequence for conversion between stairway and seating modes. This simplicity reduces the number of moving parts and potential points of failure, which can enhance reliability and reduce maintenance requirements. Additionally, the direct pivoting action allows for rapid transition, which is advantageous in time-sensitive situations such as emergency egress or quick turnaround between flight phases. The clear separation of stair and seat components also facilitates certification and inspection, as each element can be independently verified for safety and compliance. Compared to examples involving sliding, translating, or mechanically interlinked steps and seat features, the Figures 7A and 7B design offers a balance of ergonomic comfort, mechanical robustness, and operational efficiency, making it particularly suitable for applications where reliability and ease of use are paramount.

Figure 8A illustrates a side view of a crew rest system 300 having the steps 302 in the deployed position and the seat assembly 308 in the stowed position according to one example. Figure 8B illustrates a side view of the crew rest system 300 of Figure 8A having the steps 302 in the stowed position, and the seat assembly 308 in a deployed position. In this and certain other examples, the head rest 328 is configured to slide upward to deploy (e.g., linearly move), rather than rotate between positions as shown in Figures 7A and 7B.

The example illustrated in Figures 8A and 8B may be preferred over the examples shown in Figures 7A and 7B, 9A and 9B, 10A and 10B, and 11A and 11B due to its enhanced ergonomic features and user comfort. In this configuration, the headrest 328 and seat back 312 are designed to slide upward into their deployed positions, rather than rotate, which can provide a smoother and more adjustable seating experience for the occupant. The sliding mechanism allows for finer control over the positioning of the seat components, accommodating a wider range of body types and preferences. This design may also reduce the required clearance for deployment, making it particularly advantageous in confined spaces where rotational movement could be restricted. Additionally, the sliding action can minimize wear on pivot points and hinges, potentially increasing the longevity of the system. Compared to examples that rely primarily on pivoting or complex mechanical linkages, the Figures 8A and 8B example offers a streamlined and comfortable solution, making it especially suitable for applications where occupant comfort and adaptability are prioritized.

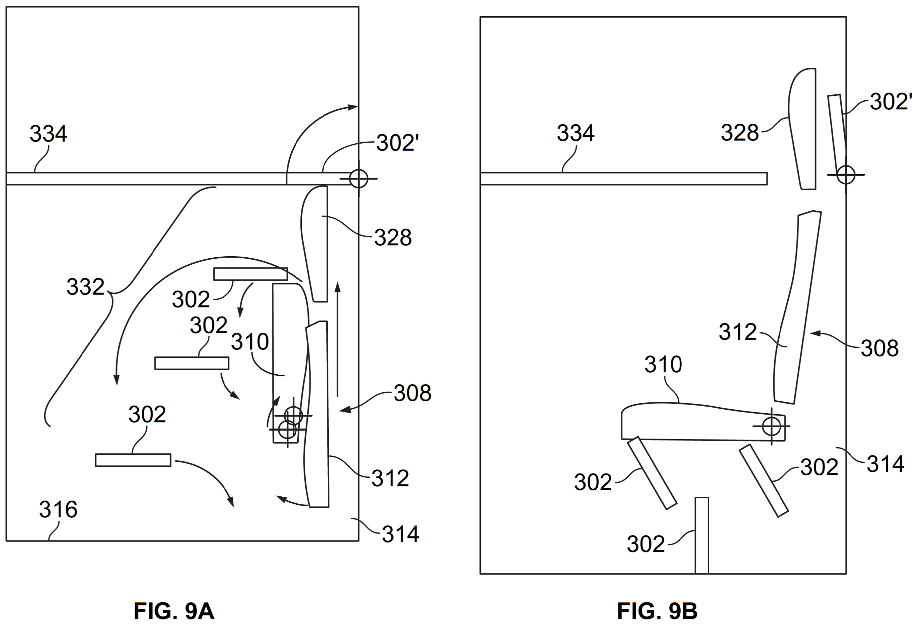

Figure 9A illustrates a side view of the crew rest system 300 having the steps 302 in a deployed position, and the seat assembly 308 in the stowed position according to one example. Figure 9B illustrates a side view of the crew rest system 300 of Figure 9A having the steps 302 in the stowed position, and the seat assembly 308 in the deployed position. Referring to Figures 9A and 9B, in this and certain other examples, the steps 302 rotate downward (or substantially downward), and the middle steps 302 first rotate to be under the seat pan 310, then move with the seat pan 310 (or seat bottom) as the seat pan 310 is folded down.

The example illustrated in Figures 9A and 9B may be preferred over the examples shown in Figures 7A and 7B, 8A and 8B, 10A and 10B, and 11A and 11B due to its integrated movement and efficient use of structural elements. In this configuration, the steps 302, 302' rotate downward or substantially downward, and the middle steps 302 first move to a position beneath the seat pan 310 before transitioning together with the seat pan 310 as the pan 310 is folded down. This coordinated movement allows the steps 302 to serve as a direct support structure for the seat assembly 308, reducing the need for additional components and simplifying the overall assembly. The integration of step and seat movement can streamline the conversion process, making it easier for crew members to operate the system 300 with fewer manual actions. Additionally, by utilizing the steps 302 as part of the seat's support, the design can achieve greater structural integrity and potentially reduce weight, which is beneficial for aircraft applications. Compared to examples that rely on separate pivoting, sliding, or more complex linkages, the Figures 9A and 9B example offers a practical and space-efficient solution, making it particularly suitable for installations where increasing utility and reducing part count are important considerations.

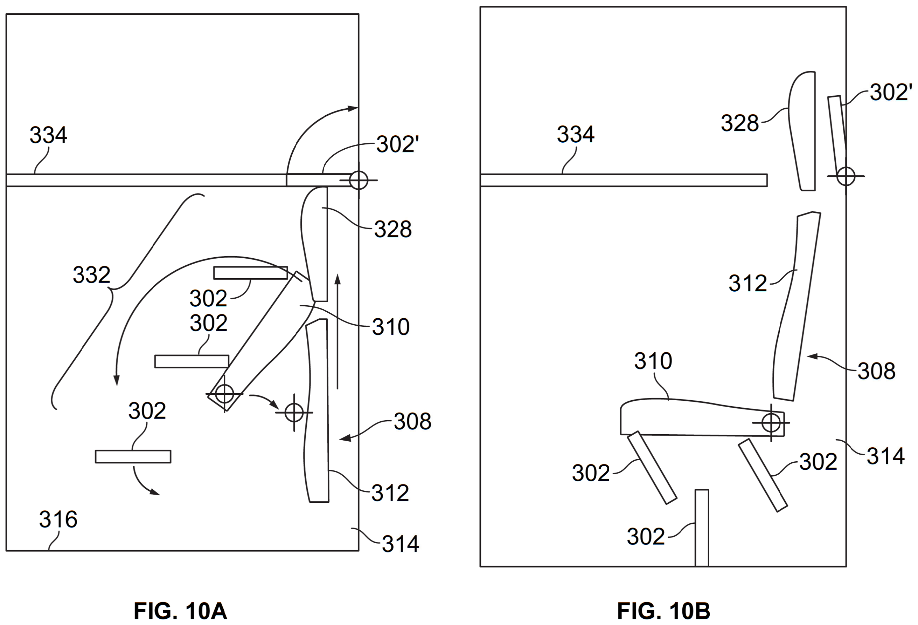

Figure 10A illustrates a side view of the crew rest system 300 having the steps 302 in the deployed position, and the seat assembly 308 in the stowed position according to one example. Figure 10B illustrates a side view of the crew rest system 300 of Figure 10A having the steps 302 in the stowed position, and the seat assembly 308 in the deployed position. Referring to Figures 10A and 10B, in this an certain other examples, the seat pan 310 and the middle steps 302 can be fixed relative to each other, such that deploying or moving (e.g., pivoting or rotating) the seat pan 310 also simultaneously stows the middle steps 302, such as the middle two steps 302.

The example illustrated in Figures 10A and 10B may be preferred over the examples shown in Figures 7A and 7B, 8A and 8B, 9A and 9B, and 11A and 11B due to its simultaneous and mechanically linked movement of the seat pan 310 and middle steps 302. In this configuration, the seat pan 310 and the middle steps 302 are fixed relative to each other, such that deploying or moving the seat pan 310 also automatically stows the middle steps 302. This direct mechanical linkage simplifies the conversion process, reducing the number of separate actions required by the crew and reducing the risk of improper sequencing or incomplete stowage. The synchronized movement can enhance operational efficiency, especially in situations where rapid conversion between stairway and seating configurations is necessary. Additionally, the fixed relationship between the seat pan 310 and steps 302 can improve the overall robustness and reliability of the system, as fewer independent moving parts are involved. Compared to examples that rely on separate pivoting, sliding, or more complex coordinated mechanisms, the Figures 10A and 10B example offers a straightforward and efficient solution, making it particularly advantageous for applications where ease of use, reliability, and quick transitions are essential.

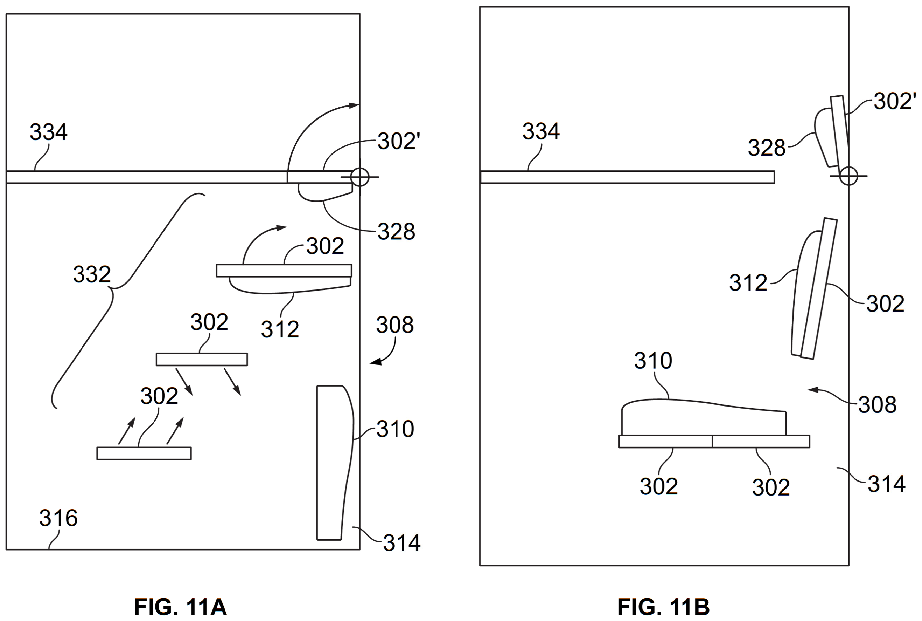

Figure 11A illustrates a side view of the crew rest system 300 having the steps 302 in the deployed position, and the seat assembly 308 in the stowed position, according to one example. Figure 11B illustrates a side view of the crew rest system 300 of Figure 11A having the steps 302 in the stowed position, and the seat assembly 308 in the deployed position. Referring to Figures 11A and 11B, in this and certain other examples, the top step 302' is coupled to the head rest 328, the step 302 below the top step 302' is coupled to the seat back 312, and the lower (e.g., two) steps 302 translate to form a lower support for the seat pan 310 in the deployed position. A separate contoured seat bottom feature can be removed from a stowed position and placed on to the support formed by the bottom steps 302 to complete the seat features.

The example illustrated in Figures 11A and 11B may be preferred over the examples shown in Figures 7A and 7B, 8A and 8B, 9A and 9B, and 10A and 10B due to its highly integrated and modular approach to seat formation using the stairway components. In this configuration, the top step 302' is coupled to the headrest 328, the step 302 below is coupled to the seat back 312, and the lower steps 302 translate to form a structural support for the seat pan 310 in the deployed position. A separate contoured seat bottom feature can be removed from a stowed position and placed onto the support formed by the bottom steps 302 to complete the seat features. This arrangement allows for a compact and efficient use of available space, as multiple seat elements are derived directly from the stairway structure 322, reducing the need for additional dedicated seat components. The modularity and integration of the steps 302, 302' with the seat features can simplify installation and maintenance, while also potentially reducing overall system weight and cost. Compared to examples that rely on separate or less integrated mechanisms, the Figures 11A and 11B example offers a versatile and space-saving solution, making it particularly suitable for aircraft interiors where increasing functionality within limited volume is a priority.

Referring to Figures 7A-11B, examples of the present disclosure provide a crew rest system having steps moveable between a stairway deployed position and a stairway stowed position, as well as a seat moveable between a seating stowed position and a seating deployed position. The crew rest systems described herein provide a TT&L seat which disposes an occupant directly adjacent to an airplane aisle rather than upstairs, thereby significantly reducing the egress path complexity as well as the egress time needed. Such examples allow for an OCR with TT&L seating capacity, which does not require an alternate egress path, and is compatible with suite style seats enabling concurrent certification of both features. A seat within the raised area of an OCR does not need to accommodate TT&L loads, and can be designed for higher comfort improved functionality, alternate orientations, and/or reduced weight and cost. The crew rest systems described herein provide a TT&L seat that is mounted lower in the OCR than current OCR TT&L seats, and reduce the design loads on the OCR in general thereby enabling a reduction in weight and cost of the OCR panels that are currently used to accommodate the TT&L loads.

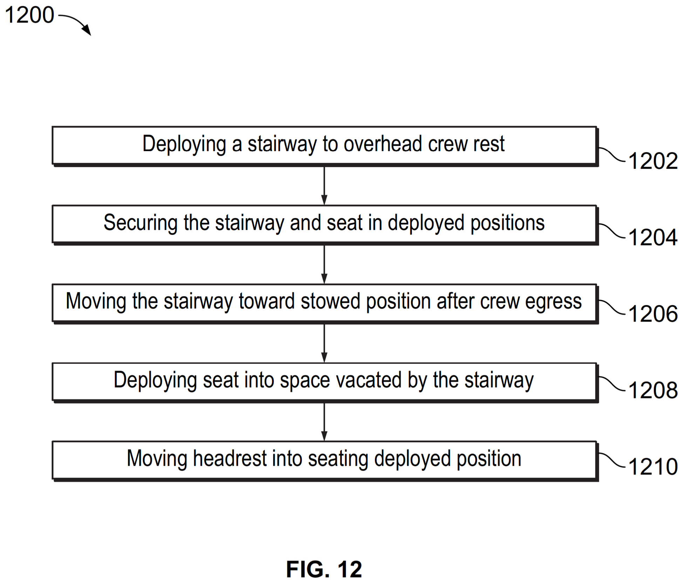

Figure 12 illustrates a flowchart of one example of a method 1200 for deploying and retracting an overhead crew rest system. The method 1200 can be used for converting an overhead crew rest entrance between an access configuration and a TT&L seating configuration. The method 1200 can facilitate efficient use of space within the entrance enclosure 304 of the overhead crew rest 300 while maintaining compliance with applicable safety and regulatory guidelines. At 1202, a stairway 332 is deployed to provide access to the overhead crew rest area. In some examples, the stairway 332, when deployed, forms an access path that allows crew members to ascend from the main deck to the overhead crew rest platform 334. This establishes an egress path for safe and efficient access.

At 1204, the stairway 332 and the seat 308 are secured in their respective deployed positions. For example, latches 330 or locking devices can be engaged to ensure that the stairway 332 remains stable during use and that the seat 308, if already deployed, is properly latched to prevent unintended movement. This securing mechanism can maintain the components in their operational states throughout crew ingress and egress.

At 1206, after crew members exit from the overhead crew rest 300, the stairway 332 is moved toward the stowed position. In some examples, this movement can involve pivoting, sliding, or rotating the stairway components to vacate space within the entrance enclosure 304. An actuation mechanism 326 or mechanical linkage can facilitate the transition of the stairway 332 into the stowed configuration. The actuation mechanism 326 can include or represent hardware circuitry that includes and/or is connected with one or more processors, such as one or more integrated circuits, application-specific integrated circuits, field programmable gate arrays, microprocessors, or similar devices.

At 1208, the seat 308 is deployed into the space vacated by the stairway 332. For example, the seat 308, which may include a seat pan 310 and backrest 312, can be moved from the stowed position to the deployed position by folding, rotating, or sliding the seat components into place. The deployment of the seat 308 ensures that the seat 308 is fully contained within the entrance enclosure 304 and is usable during TT&L phases.

At 1210, the headrest 328 is moved into the seating deployed position. In some examples, this step can involve sliding or rotating the headrest 328 into place to provide additional comfort and safety for the occupant. The deployment of the headrest 328 completes the conversion process, ensuring that the seat 308 is functional and compliant with TT&L certification guidelines.

Further, the disclosure comprises examples according to the following clauses:
Clause 1: A crew rest system for an internal cabin of a vehicle, the crew rest system comprising: steps moveable between a stairway deployed position and a stairway stowed position; and a seat moveable between a seating stowed position and a seating deployed position.
Clause 2: The crew rest system of Clause 1, wherein the steps are disposed within an entrance enclosure of an overhead crew rest of the internal cabin and, in the stairway deployed position, define a primary egress path between a main deck of the internal cabin and a platform of the overhead crew rest.
Clause 3: The crew rest system of Clause 2, wherein, while the steps are moved to the stairway stowed position, the seat occupies at least a portion of space vacated by the steps so that the seat is completely contained within the entrance enclosure and is certified for use during taxi, take-off, and landing and includes a safety restraint and a head-impact-protection structure.
Clause 4: The crew rest system of any of Clauses 1-3, wherein the steps are each hinged to pivot upward to a generally vertical or substantially orientation when moved from the stairway deployed position to the stairway stowed position.
Clause 5: The crew rest system of any of Clauses 1-4, wherein the seat includes a seat pan and a backrest that are folded against an entrance enclosure in the seating stowed position and rotate outward into the seating deployed position.
Clause 6: The crew rest system of Clause 5, wherein at least one of the steps forms a structural support for one or both of the seat pan or the backrest while the seat is in the seating deployed position.
Clause 7: The crew rest system of any of Clauses 1-6, further comprising: an actuation mechanism operatively coupled to the steps and the seat and configured to drive movement of the steps toward the stairway stowed position and, sequentially, movement of the seat toward the seating deployed position.
Clause 8: The crew rest system of Clause 7, wherein the actuation mechanism includes a mechanical linkage that prevents deployment of the seat until the steps reach the stairway stowed position.
Clause 9: The crew rest system of any of Clauses 1-8, wherein the seat includes a headrest that is deployed by sliding or rotating into position after the steps are moved to the stairway stowed position.
Clause 10: The crew rest system of any of Clauses 1-9, wherein the steps and the seat are configured such that the seat is adjacent to a main aisle of the internal cabin while in the seating deployed position.
Clause 11: The crew rest system of any of Clauses 1-10, wherein the seat includes a contoured seat bottom feature that is removed from a stowed location and placed onto the steps while the steps are in the stairway stowed position.
Clause 12: The crew rest system of any of Clauses 1-11, wherein the steps and the seat are configured such that movement of the steps drives movement of the seat or movement of the seat drives movement of the steps.
Clause 13: A method of converting an overhead crew rest entrance of a vehicle, optionally an aircraft, between an access configuration and a taxi-take-off-landing seating configuration, the method comprising: deploying a stairway that provides crew access to an overhead crew rest; after crew egress, moving the stairway toward a stowed position by at least one of pivoting, sliding, or rotating the stairway; and deploying a seat into space vacated by the stairway so that the seat is fully contained within an entrance enclosure and is usable during taxi, take-off, and landing.
Clause 14: The method of Clause 13, wherein moving the stairway toward the stowed position includes pivoting a plurality of stair treads upward against a sidewall of the entrance enclosure and rotating a seat pan downward into a vacated space.
Clause 15: The method of either of Clauses 13 and 14, wherein deploying the seat comprises folding out a seat pan and rotating a backrest outward from an interior surface of the entrance enclosure.
Clause 16: The method of any of Clauses 13-15, further comprising: sliding a headrest upward into a seating deployed position after the stairway is moved to the stowed position.
Clause 17: The method of any of Clauses 13-16, further comprising: driving movement of the stairway and the seat via a mechanical linkage configured to prevent deployment of the seat until the stairway reaches the stowed position.
Clause 18: The method of any of Clauses 13-17, further comprising: securing the stairway in a stairway deployed position; and securing the seat in a seating deployed position with respective latches.
Clause 19: A conversion mechanism for an overhead crew rest entrance of a vehicle, the mechanism comprising: a stair module mounted for movement between a stairway deployed position and a stairway stowed position; a seat module mounted for movement between a seating stowed position and a seating deployed position; a coupled-motion linkage operatively connecting the stair module and the seat module such that movement of the stair module toward the stairway stowed position drives the seat module toward the seating deployed position; and latches configured to secure the stair module in the stairway deployed position and to secure the seat module in the seating deployed position.
Clause 20: The conversion mechanism of Clause 19, wherein the stair module includes a plurality of stair treads connected to a sidewall of an entrance enclosure in a manner that allows rotational movement, the plurality of stair treads being configured to rotate upward to the stairway stowed position.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For instance, the above-described examples (and/or features thereof) can be used in combination with each other. In addition, many modifications can be made to adapt a particular situation or material to the teachings of the various examples of the disclosure without departing from the scope of the claims. While the dimensions and types of materials described herein are intended to define the parameters of the various examples of the disclosure, the examples are by no means limiting and are exemplary. Many other examples will be apparent to those of skill in the art upon reviewing the above description. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art.

## Claims

1. A crew rest system (300) for an internal cabin (130) of a vehicle, the crew rest system (300) comprising:
steps (302) moveable between a stairway deployed position and a stairway stowed position; and
a seat (308) moveable between a seating stowed position and a seating deployed position.

2. The crew rest system (300) of claim 1, wherein the steps (302) are disposed within an entrance enclosure (304) of an overhead crew rest of the internal cabin (130) and, in the stairway deployed position, define a primary egress path between a main deck of the internal cabin (130) and a platform (334) of the overhead crew rest.

3. The crew rest system (300) of claim 2, wherein, while the steps (302) are moved to the stairway stowed position, the seat (308) occupies at least a portion of space vacated by the steps (302) so that the seat (308) is completely contained within the entrance enclosure (304) and is certified for use during taxi, take-off, and landing and includes a safety restraint and a head-impact-protection structure.

4. The crew rest system (300) of any preceding claim, wherein the steps (302) are each hinged to pivot upward to a generally vertical orientation when moved from the stairway deployed position to the stairway stowed position.

5. The crew rest system (300) of any preceding claim, wherein:
the seat (308) includes a seat pan (310) and a backrest (312) that are folded against an entrance enclosure (304) in the seating stowed position and rotate outward into the seating deployed position; and, optionally,
at least one of the steps (302) forms a structural support for one or both of the seat pan (310) or the backrest (312) while the seat (308) is in the seating deployed position.

6. The crew rest system (300) of any preceding claim, further comprising:
an actuation mechanism operatively coupled to the steps (302) and the seat (308) and configured to drive movement of the steps (302) toward the stairway stowed position and, sequentially, movement of the seat (308) toward the seating deployed position; and, optionally,
wherein the actuation mechanism includes a mechanical linkage that prevents deployment of the seat (308) until the steps (302) reach the stairway stowed position.

7. The crew rest system (300) of any preceding claim, wherein the seat (308) includes:
a headrest that is deployed by sliding or rotating into position after the steps (302) are moved to the stairway stowed position; and/or
a contoured seat bottom feature that is removed from a stowed location and placed onto the steps (302) while the steps (302) are in the stairway stowed position.

8. The crew rest system (300) of any preceding claim, wherein the steps (302) and the seat (308) are configured such that the seat (308) is adjacent to a main aisle of the internal cabin (130) while in the seating deployed position.

9. The crew rest system (300) of any preceding claim, wherein the steps (302) and the seat (308) are configured such that movement of the steps (302) drives movement of the seat (308) or movement of the seat (308) drives movement of the steps (302).

10. The crew rest system (300) of any preceding claim, further comprising latches (330) configured to secure the steps (302) in the stairway deployed position and to secure the seat (308) in the seating deployed position.

11. An aircraft (100) comprising the crew rest system (300) of any preceding claim.

12. A method of converting an overhead crew rest entrance of a vehicle, optionally an aircraft (100), between an access configuration and a taxi-take-off-landing seating configuration, the method comprising:
deploying a stairway (332) that provides crew access to an overhead crew rest;
after crew egress, moving the stairway (332) toward a stowed position by at least one of pivoting, sliding, or rotating the stairway (332); and
deploying a seat (308) into space vacated by the stairway (332) so that the seat (308) is fully contained within an entrance enclosure (304) and is usable during taxi, take-off, and landing.

13. The method of claim 12, wherein:
moving the stairway (332) toward the stowed position includes pivoting a plurality of stair treads upward against a sidewall of the entrance enclosure (304) and rotating a seat (308) pan downward into a vacated space; and/or
deploying the seat (308) comprises folding out a seat pan (310) and rotating a backrest (312) outward from an interior surface of the entrance enclosure (304).

14. The method of claim 12 or 13, further comprising:
sliding a headrest upward into a seating deployed position after the stairway (332) is moved to the stowed position; and/or
driving movement of the stairway (332) and the seat (308) via a mechanical linkage configured to prevent deployment of the seat (308) until the stairway (332) reaches the stowed position.

15. The method of any of claims 12 to 14, further comprising:
securing the stairway (332) in a stairway deployed position; and
securing the seat (308) in a seating deployed position with respective latches (330).
